# EUROPEAN PATENT SPECIFICATION

(11) **EP 0 960 175 B1**
(45) Date of publication and mention of the grant of the patent: **07.05.2003**
(21) Application number: 98963190.8
(22) Date of filing: 15.12.1998
(51) Int. Cl.: C09J 7/00, B05D 1/32, C09J 7/04, B05B 15/04

(54) **HIGH TEMPERATURE RESISTANT MASKING DEVICES WITH TABS**
HOCHTEMPERATURBESTÄNDIGE MASKIERVORRICHTUNG MIT LASCHEN
DISPOSITIF DE MASQUAGE RESISTANT AUX TEMPERATURES ELEVEES ET DOTE DE LANGUETTES

(30) Priority: 15.12.1997 US 69495 P
(43) Date of publication of application: 01.12.1999
(73) Proprietor: Engineered Products & Services Inc., Brookfield, WI 53005 (US)
(72) Inventor: SARAJIAN, Kissak, T., Glendale, CA 91202 (US)
(74) Representative: Gillam, Francis Cyril
(86) International application number: US9826594
(87) International publication number: WO99031192

(56) References cited:
- WO-A-92/06794
- WO-A-92/16367
- US-A- 4 550 683
- US-A- 4 787 158
- US-A- 5 441 769
- US-A- 5 464 692
- US-A- 5 514 442
- US-A- 5 618 600
- US-A- 5 631 055
- US-A- 5 776 572

## Description

### BACKGROUND OF THE INVENTION

The present invention relates to masking devices, and more particularly, to high temperature resistant masking devices having pull tabs extending upwardly therefrom to facilitate easy removal of the masking devices from a masking area.

Masking plays a vital role in the painting or coating of parts used in the automotive, aerospace, electronics and other industries. The painting or coating of parts may involve liquid coating, plating, powder coating or electroplating. The coating may be applied by a variety of methods including brushing, rolling, spraying, dipping, flow-coating, electro-static coating, and submersion in deposition tanks. The liquid, powder or plating material may be applied to wood, fiberglass, or metal surfaces in order to protect and strengthen those surfaces. The coating protects the surface of a part by preventing electrical leakage, oxidation, corrosion and decay. Once the coating is applied, it is often cured at temperatures between 94-315 °C (200-600° Fahrenheit) to harden and cross-link the coating on the surface. After the curing process is complete, the cured coating forms a very strong protective layer on the surface that is highly resistant to scratching and chipping.

In most applications, a protective coating is applied to certain areas of a surface but not to other areas of the surface. The areas where the coating is not to be applied must be covered or masked off. Typically, a paper or polyester film element in the form of masking tape is applied to the surface areas to be masked. The masking tape generally has an adhesive on one side so that it may be affixed to the surface to be masked. Once the painting or coating process has been completed, the masking tape is removed from the surface.

There are problems associated with masking areas of a surface during painting or coating. One problem is that the masking tape is often hard to remove from the surface after it has been through the coating process. This is due, at least in some part, to the temperatures used in the curing process. The masking tape must withstand high curing temperatures of approximately 94-315°C (200-600° Fahrenheit). Usually, a great deal of time and effort is required to remove the tape from the masking area. Technicians often use razor blades, knives, screw drivers or other devices to remove the masking tape. These devices often cause scratches or cuts on the surface of the coated part. Second, occasionally the thickness of the coating is so thick that it covers a standard masking device making it impossible to remove.

Thus, it is desirable to provide masking devices which are easily removable from the masking surfaces and masking devices. One such device is shown in WO-A-92/16367. This has a main masking area and a lifting tab which projects sideways from an edge of the main masking area. Though the tab can assist removal of the device, it can also inadvertently mask an area which is intended to be painted.

### SUMMARY OF THE INVENTION

The present invention provides masking devices for masking certain areas of a surface during liquid coating, powder coating, plating or electroplating. The masking devices are preferably die-cut from sheet material into substrates, an adhesive is applied to the bottom surface of the substrates, a tab is formed extending upwardly from the top surface of the substrate, and the substrate is affixed to a release liner. The masking devices are then removed from the release liner and applied to a masking surface.

The masking devices comprise a substrate having a top surface and a bottom surface, bound by a peripheral edge. An adhesive is applied to the bottom surface, and a tab is provided to facilitate easy removal of the masking device from the masking surface. Such a masking device is characterised in that the tab rises out of the top surface of the substrate, the junction between the top surface and the tab lying wholly within the peripheral edge of the top surface. Preferably, the tab consists of two side members which are formed when the substrate is pushed inwardly from two opposite sides towards the center. The two side members become affixed together when the bottom surfaces of each side member come in contact with each other. The adhesive is preferably only applied to a portion of the bottom surface of the side members to ensure that the side members are securely bonded together. The process of creating the tabs also creates two folding lines along the base of the tab and a center apex at the top of the tab.

The masking devices are preferably made from a unitary substrate material, but could also be made from two separate substrates which are joined together during formation of the tab. The two substrates are affixed together when the bottom surfaces of the side members having adhesive applied thereto come in contact with each other.

The method of making the masking devices involves die-cutting a sheet of flexible material into a desired substrate shape having a top surface and a bottom surface, applying adhesive to the bottom surface of the die-cut substrate, forming a pull tab in the substrate so as to extend upwardly from the top surface of the substrate, and applying the tabbed substrates to a release liner for removal of the substrate therefrom when the substrate is to be applied to an area of a part that is to be masked, when the remainder is painted or coated.

Various other features, aspects and advantages of the invention may be apparent to those skilled in the art from the following drawings and detailed description of the invention.

### BRIEF DESCRIPTION OF THE DRAWINGS

Fig. 1 is a perspective view of a masking device in accordance with the present invention.
Fig. 2 is a top plan view of the masking device of Fig. 1 in its unfolded form.
Fig. 3 is an enlarged side view of the masking device of Fig. 1 in its folded form.
Fig. 4 is a perspective view of a plurality of masking devices affixed to a release liner.

### DETAILED DESCRIPTION OF THE INVENTION

The present invention provides masking devices that are used for masking off areas of a surface during liquid coating, powder coating, plating or electroplating. The masking devices are die-cut into various shapes and sizes, and placed on rolls of release liner so that they may be readily used for masking. The masking devices are removed from the release liner and applied to the surface areas to be masked.

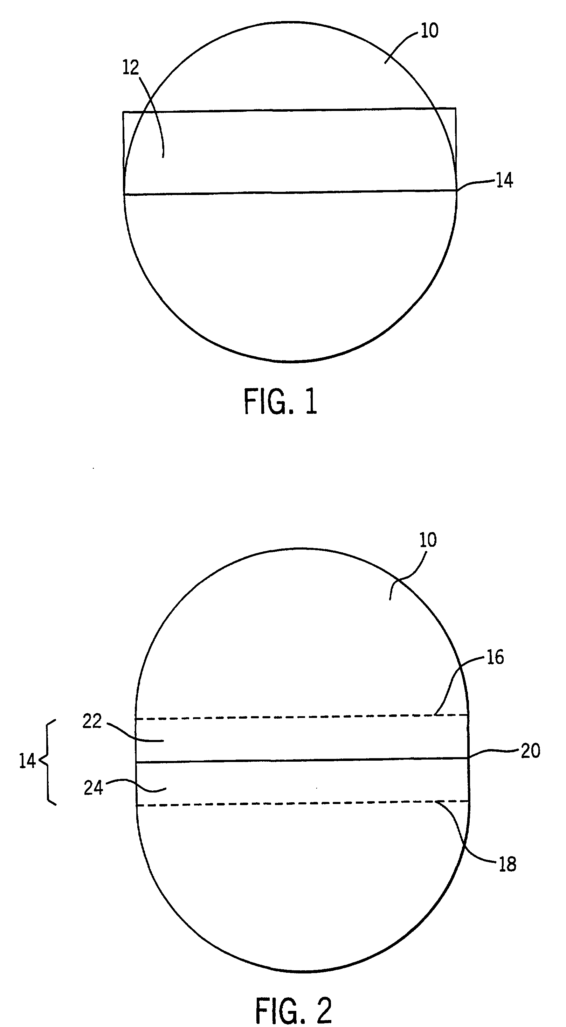

Fig. 1 shows a masking device 10 having a pull tab 12 extending upwardly from the device's center portion 14. The pull tab 12 is used to ease the application and, particularly, the removal of the masking device from the masking area. The masking device 10 is simply applied to the desired masking area by gripping the tab, removing it from the release liner and applying it to the masking surface. The masking device 10 has a top surface 26 and a bottom surface 28. Adhesive is applied to the bottom surface 28 so that the masking device may be affixed to the masking area. After a part has been coated, the masking device is removed from the part by pulling upwardly from the tab.

The masking device 10 can be of any shape and size, the circular shape shown in the drawings is only one example. The masking device 10 is preferably made of a thin flexible material such as crepe paper, vinyl, polyester, mylar, kapton, etc.

Fig. 2 shows the masking device 10 in its unfolded form. The masking device 10 preferably consists of a unitary paper substrate having a top surface 26 and a bottom surface 28. As stated above, an adhesive is applied to the bottom surface 26 of the device 10 for removable attachment to a masking surface. The tab 12 is created by folding the masking device 10 close to the device's center portion 14 and along folding lines 16, 18 and 20. The two ends of the device opposite the center portion 14 are pushed inwardly toward the center of the device to create a tab 12 which rises upwardly from folding lines 16 and 18.

It is also possible for the masking device 10 to be made from two separate substrates that come together along line 20. The two substrates are joined together by tab 12. The tab is created by pushing the two substrates inwardly toward line 20 so that a tab rises upwardly from folding lines 16 and 18. Adhesive applied to the bottom surface of side members 22 and 24 cause the two substrates to be joined together at tab 12.

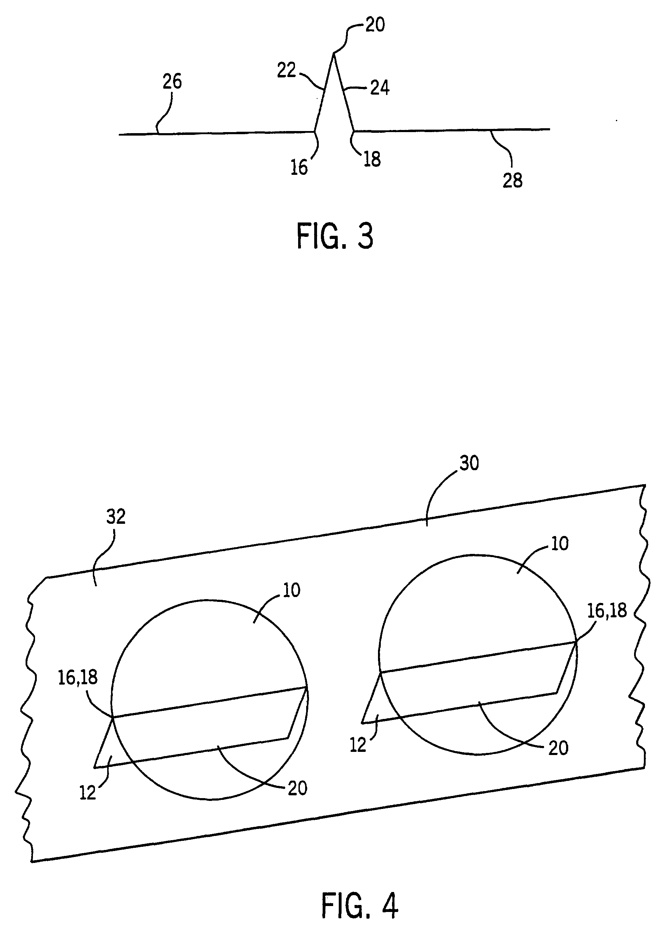

Fig. 3 shows a side view of the masking element 10 in its folded form. The pull tab 12 consists of side members 22 and 24 that are folded together at the center apex 20. Preferably, adhesive is only applied to the bottom surface of one side member to ensure that the two side members are securely bonded together. So for example, side member 22 may have adhesive applied to its bottom surface while side member 24 does not, and vice versa.

Fig. 4 shows a plurality of masking devices 10 applied to a release liner 30. The release liner 30 has a coating on its top surface 32 that allows the masking devices 10 to be easily removed for attachment to the masking area of a part that is to be painted or coated. The release liner provides any easy way to package the masking devices for sale or use.

The masking devices 10 are die-cut from sheet material to form substrates of various shapes and sizes. Adhesive is applied to the bottom surface of the die-cut substrates and tabs are formed which extend upwardly from the top surface of the substrates. The tabbed substrates are then placed on the release liner 30 and rolled up into rolls to be used by various industries that require masking devices for powder or liquid coating.

The masking devices shown in the drawings are typically of those used to cover recessed reflectors on automobiles and trucks, grounding points on bus bars, and other areas where paint or another coating is not desirable.

It is recognized that various alternatives, modifications and equivalents may be apparent to those skilled in the art. Thus, the following claims should be interpreted to cover such alternatives, modifications and equivalents.

## Claims

1. A masking device (10) comprising:
a substrate having a top surface (26) and a bottom surface (28)
an adhesive applied to the bottom surface of the substrate for removable attachment of the substrate on a masking surface; and
a tab (12) for easy removal of the substrate from the masking surface;
**characterized in that** the tab (12) rises out of the top surface (26) of the substrate, the junction between the tab and the top surface lying wholly within the peripheral edge of the top surface.

2. A masking device as claimed in claim 1, wherein the tab consists of two side members (22,24), each having a top surface and a bottom surface, the bottom surfaces of the side members being bonded together by an adhesive applied thereto.

3. A masking device as claimed in claim 2, wherein the adhesive is applied to only a portion of the bottom surfaces of the side members (22,24).

4. A masking device as claimed in claim 3, wherein the adhesive is a silicone adhesive.

5. A masking device as claimed in claim 3, wherein the adhesive is a rubber-based adhesive.

6. A masking device as claimed in any of claims 2 to 5, wherein the side members (22,24) are formed by applying pressure to opposite sides of the substrate inwardly towards the center of the substrate, the side members rising out of the top surface (26) of the substrate along fold lines (16,18) created in the substrate.

7. A masking device as claimed in any of the preceding claims, wherein the substrate is die-cut from sheet material into various shapes and sizes.

8. A masking device as claimed in any of the preceding claims, wherein the bottom surface of the substrate is carried on a release liner (30), before application to a surface to be masked.

9. A masking device as claimed in any of the preceding claims, wherein the tab (12) rises out of a central region of the top surface (26).

10. A masking device as claimed in any of the preceding claims, wherein the substrate is made of crepe paper.

11. A masking device as claimed in any of claims 1 to 9, wherein the substrate is made from a material which is high temperature resistant.

12. A masking device as claimed in claim 11, wherein the substrate can withstand temperatures of approximately 94 to 315 °C (200 to 600 °F).

13. A masking device as claimed in any of the preceding claims, wherein the substrate is a single unitary structure.

14. A masking device as claimed in claim any of claims 1 to 12, wherein the substrate comprises two substrate elements bonded together, each element having a bottom surface at least parts of which define the bottom surface of the substrate.

15. A masking device as claimed in claim 14, wherein the substrate elements are bonded together by joining a portion of the bottom surface of each substrate element, so creating the tab.

16. A method of forming a masking device comprising the steps of:
die-cutting a substrate from sheet material, the substrate having a top surface (26) and a bottom surface (28);
applying an adhesive to the bottom surface (28) of the substrate;
forming a tab (12) in the substrate by applying pressure to opposite sides of the substrate inwardly towards the center of the substrate, so that the tab (12) rises out of the top surface (26) of the substrate; and
applying the bottom surface (28) of the substrate to a roll of release liner (30) for removal of the substrate therefrom when the substrate is to be applied to an area to be masked.

## Patentansprüche

1. Maskierungsvorrichtung (10) mit:
einem Substrat mit einer oberen Oberfläche (26) und einer unteren Oberfläche (28) begrenzt von einem Umfangsrand,
einem Klebstoff, der auf die untere Oberfläche des Substrats zur lösbaren Befestigung des Substrats an einer Maskierungsoberfläche aufgebracht ist, und
einer Lasche (12) zur einfachen Entfernung des Substrats von der Maskierungsoberfläche,
**dadurch gekennzeichnet, daß** sich die Lasche (12) von der oberen Oberfläche (26) des Substrats erhebt, wobei die Verbindung zwischen der Lasche und der oberen Oberfläche vollständig innerhalb des Umfangsrandes der oberen Oberfläche liegt.

2. Maskierungsvorrichtung nach Anspruch 1, wobei die Lasche aus zwei Seitenteilen (22, 24) besteht, von denen jedes eine obere Oberfläche und eine untere Oberfläche hat, wobei die unteren Oberflächen der Seitenteile durch einen darauf aufgebrachten Klebstoff miteinander verbunden sind.

3. Maskierungsvorrichtung nach Anspruch 2, wobei der Klebstoff nur auf einen Teilbereich der unteren Oberflächen der Seitenteile (22, 24) aufgebracht ist.

4. Maskierungsvorrichtung nach Anspruch 3, wobei der Klebstoff ein Silikonklebstoff ist.

5. Maskierungsvorrichtung nach Anspruch 3, wobei der Klebstoff ein Klebstoff auf Gummibasis ist.

6. Maskierungsvorrichtung nach einem der Ansprüche 2 bis 5, wobei die Seitenteile (22, 24) gebildet werden, indem Druck auf gegenüberliegende Seiten des Substrats auf die Mitte des Substrats zu ausgeübt wird, wobei die Seitenteile sich von der oberen Oberfläche (26) des Substrats entlang von in dem den Substrat erzeugten Faltlinien (16, 18) erheben.

7. Maskierungsvorrichtung nach einem der vorhergehenden Ansprüche, wobei das Substrat aus flächigem Material in verschiedenen Formen und Größen gestanzt wird.

8. Maskierungsvorrichtung nach einem der vorhergehenden Ansprüche, wobei die untere Oberfläche des Substrats, vor Aufbringung auf eine zu maskierende Oberfläche, auf einer Ablöseschicht (30) getragen ist.

9. Maskierungsvorrichtung nach einem der vorhergehenden Ansprüche, wobei die Lasche (12) sich von einer mittleren Region der oberen Oberfläche (26) erhebt.

10. Maskierungsvorrichtung nach einem der vorhergehenden Ansprüche, wobei das Substrat aus Kreppapier hergestellt ist.

11. Maskierungsvorrichtung nach einem der Ansprüche 1 bis 9, wobei das Substrat aus einem Material hergestellt ist, das hochtemperaturbeständig ist.

12. Maskierungsvorrichtung nach Anspruch 11, wobei das Substrat Temperaturen von etwa 94 bis 315°C (200 - 600°F) widerstehen kann.

13. Maskierungsvorrichtung nach einem der vorhergehenden Ansprüche, wobei das Substrat eine einzelne, einheitliche Struktur ist.

14. Maskierungsvorrichtung nach einem der Ansprüche 1 bis 12, wobei das Substrat 2 aneinander gebundene Elemente aufweist, wobei jedes Element eine untere Oberfläche hat, von denen wenigstens Teile die untere Oberfläche des Substrats definieren.

15. Maskierungsvorrichtung nach Anspruch 14, wobei die Substratelemente miteinander verbunden sind, indem ein Bereich der unteren Oberflächen der Substratelemente miteinander verbunden werden, um so die Lasche zu bilden.

16. Verfahren zur Herstellung einer Maskierungsvorrichtung mit den Schritten:
Ausstanzen eines Substrats aus flächigem Material, wobei das Substrat eine obere Oberfläche (26) und eine untere Oberfläche (28) hat,
Aufbringen von Klebstoff auf die untere Oberfläche (28) des Substrats,
Bilden einer Lasche (12) in dem Substrat, indem Druck auf gegenüberliegende Seiten des Substrats nach innen auf die Mitte des Substrats zu ausgeübt wird, so daß die Lasche (12) sich aus von oberen Oberfläche (26) des Substrats erhebt, und
Aufbringen der unteren Oberfläche (28) des Substrats auf eine Rolle einer Ablöseschicht (30) zum Entfernen des Substrats davon, wenn das Substrat auf ein zu maskierendes Gebiet aufgebracht werden soll.

## Revendications

1. Dispositif de masquage (10) comprenant:
- un substrat ayant une surface supérieure (26) et une surface inférieure (28) limitées par un bord périphérique;
- un adhésif appliqué sur la face inférieure du substrat pour l'attachement amovible du substrat sur une surface à masquer; et,
- une languette (12) pour le retrait facile du substrat de sur la surface à masquer;
**caractérisé en ce que** la languette (12) s'élèvent depuis la surface supérieure (26) du substrat, la liaison entre la languette et la surface supérieure s'étendant entièrement à l'intérieur du bord périphérique de la surface supérieure.

2. Dispositif de masquage selon la revendication 1, dans lequel la languette est constituée de deux éléments latéraux (22,24), chacun ayant une surface supérieure et une surface inférieure, les surfaces inférieures des éléments latéraux étant collées ensemble par un adhésif qui y est appliqué.

3. Dispositif de masquage selon la revendication 2, dans lequel l'adhésif est appliqué seulement sur une portion des surfaces inférieures des éléments latéraux (22,24).

4. Dispositif de masquage selon la revendication 3, dans lequel l'adhésif est une silicone adhésive.

5. Dispositif de masquage selon la revendication 3, dans lequel l'adhésif est un adhésif à base de caoutchouc.

6. Dispositif de masquage selon l'une quelconque des revendications 2 à 5, dans lequel les éléments latéraux (22,24) sont formés en appliquant une pression sur des côtés opposés du substrat, vers l'intérieur et le centre du substrat, les éléments latéraux s'élevant depuis la surface supérieure (26) du substrat, le long de lignes de pliage (16,18) crées dans le substrat.

7. Dispositif de masquage selon l'une quelconque des revendications précédentes, dans lequel le substrat est découpé à l'emporte-pièce dans un matériau en feuille, selon diverses formes et tailles.

8. Dispositif de masquage selon l'une quelconque des revendications précédentes, dans lequel la surface inférieure du substrat est portée sur une doublure anti-adhésive (30), avant application sur une surface qui doit être masquée.

9. Dispositif de masquage selon l'une quelconque des revendications précédentes, dans lequel la languette (12) s'élève depuis une région centrale de la surface supérieure (26).

10. Dispositif de masquage selon l'une quelconque des revendications précédentes, dans lequel le substrat est fait de papier crêpé.

11. Dispositif de masquage selon l'une quelconque des revendications 1 à 9, dans lequel le substrat est fait à partir d'un matériau qui est résistant à une température élevée.

12. Dispositif de masquage selon la revendication 11, dans lequel le substrat peut résister à des températures d'approximativement 94 à 315°C (200 à 600°F).

13. Dispositif de masquage selon l'une quelconque des revendications précédentes, dans lequel le substrat est une structure en une seule pièce.

14. Dispositif de masquage selon l'une quelconque des revendications 1 à 12, dans lequel le substrat comprend deux éléments de substrat collés ensemble, chaque élément ayant une surface inférieure dont au moins des parties définissent la surface inférieure du substrat.

15. Dispositif de masquage selon la revendication 14, dans lequel les éléments de substrat sont collés ensemble en unissant une portion de la surface inférieure de chaque élément de substrat, de façon à créer une languette.

16. Méthode pour fabriquer un dispositif de masquage comprenant les étapes de:
- découpage d'un substrat à l'emporte pièce dans un matériau en feuille, le substrat ayant une surface supérieure (26) et une surface inférieure (28);
- application d'un adhésif sur la surface inférieure (28) du substrat;
- formation d'une languette (12) en appliquant une pression sur des côtés opposés du substrat, vers l'intérieur et le centre du substrat, de sorte que la languette (12) s'élève depuis la surface supérieure (26) du substrat; et,
- application de la surface inférieure (28) du substrat sur un rouleau de doublure anti-adhésive (30) pour en retirer le substrat lorsque le substrat doit être appliqué sur une surface qui doit être masquée.
